# EUROPÄISCHE PATENTSCHRIFT

(11) **EP 3 347 231 B1**
(45) Veröffentlichungstag und Bekanntmachung des Hinweises auf die Patenterteilung: **14.02.2024**
(21) Anmeldenummer: 16770446.9
(22) Anmeldetag: 31.08.2016
(51) Int. Cl.: B60L 53/14, B60L 53/30, B60L 53/35, B60L 53/36, B60L 5/28

(54) **POSITIONIEREINHEIT FÜR EINE LADESTATION UND VERFAHREN ZUR KONTAKTIERUNG**
POSITIONING UNIT FOR A CHARGING STATION AND CONTACTING METHOD
UNITÉ DE POSITIONNEMENT POUR UNE STATION DE CHARGE ET PROCÉDÉ POUR LA MISE EN CONTACT

(30) Priorität: 11.09.2015 DE 102015217380
(43) Veröffentlichungstag der Anmeldung: 18.07.2018
(73) Patentinhaber: Schunk Transit Systems GmbH, 5151 Nussdorf am Haunsberg (AT)
(72) Erfinder: GAMSJÄGER, Tobias, 5020 Salzburg (AT)
(74) Vertreter: advotec.
(86) Internationale Anmeldenummer: PCT/EP2016/070473
(87) Internationale Veröffentlichungsnummer: WO 2017/042065

(56) Entgegenhaltungen:
- EP-A2- 2 586 645
- WO-A2-2011/079215
- CN-A- 101 531 141
- DE-A1- 2 522 876
- DE-A1-102013 206 840
- DE-U1-202014 007 218
- JP-A- 2012 080 628
- US-A1- 2012 111 682
- US-A1- 2013 076 902

## Beschreibung

Die Erfindung betrifft eine Positioniereinheit für eine Ladestation eines elektrisch angetriebenen Fahrzeugs sowie ein Verfahren zur Ausbildung einer elektrisch leitenden Verbindung zwischen dem Fahrzeug, insbesondere Elektrobus oder dergleichen, und der Ladestation, wobei die Positioniereinheit oberhalb eines Fahrzeugs anordbar ausgebildet ist, wobei mittels der Positioniereinheit ein elektrischer Ladekontakt der Ladestation relativ zu einer Kontaktfläche des Fahrzeugs bewegbar und mit dieser kontaktierbar ist, wobei die Positioniereinheit eine Gelenkarmvorrichtung und eine Antriebvorrichtung zum Antrieb der Gelenkarmvorrichtung aufweist, wobei die Antriebvorrichtung einen Verstellantrieb zur Ausbildung einer auf die Gelenkarmvorrichtung wirkenden Verstellkraft und eine mit dem Verstellantrieb mechanisch zusammenwirkende Federeinrichtung aufweist.

Derartige Positioniereinheiten und Verfahren sind aus dem Stand der Technik bekannt und werden regelmäßig bei elektrisch angetriebenen Fahrzeugen eingesetzt, die zwischen Haltestellen verkehren. Dies können Elektrobusse aber auch prinzipiell andere Fahrzeuge, wie beispielsweise ein Zug oder eine Straßenbahn, sein, die nicht permanent elektrisch mit einem Fahrdraht oder Ähnlichem verbunden sind. Bei diesen Fahrzeugen erfolgt eine Aufladung eines elektrischen Energiespeichers bei Fahrtunterbrechung an einer Haltestelle durch eine Ladestation. Das Fahrzeug wird an der Haltestelle mit der Ladestation elektrisch verbunden, wobei der Energiespeicher zumindest so weit aufgeladen wird, dass das Fahrzeug die nächste anzufahrende Haltestelle mit einer Ladestation erreichen kann. Zur Herstellung einer elektrischen Verbindung zwischen Fahrzeug und Ladestation wird eine Positioniereinheit eingesetzt, die auf einem Fahrzeugdach montiert sein kann und einen Ladekontakt des Fahrzeugs mit einer Kontaktfläche der Ladestation oberhalb des Fahrzeugs verbindet. Weiter ist es bekannt, Positioniereinheiten zu verwenden, die oberhalb des Fahrzeugs an der betreffenden Haltestelle montiert bzw. positioniert sind. Ein Ladekontakt der Ladestation wird dann in Richtung einer Kontaktfläche auf einem Dach des Fahrzeugs bewegt und eine elektrische Verbindung hergestellt. Bei dieser Variante der Fahrzeugkontaktierung müssen alle Ladestationen entlang einer Fahrtstrecke mit einer entsprechenden Positioniereinheit ausgestattet sein, weshalb die Positioniereinheit besonders kostengünstig, zuverlässig und gleichzeitig wartungsarm sein muss.

Wesentlich bei einer Zusammenführung von Ladestation und Kontaktfläche des Fahrzeugs ist, dass der Ladekontakt mit einer definierten Kontaktkraft auf die Kontaktfläche gedrückt wird, um eine sichere elektrische Verbindung ausbilden zu können. Eine Positioniereinheit zur Ausbildung einer definierten Kontaktkraft ist aus der DE 43 34 716 A1 bekannt, wobei diese Positioniereinheit zur Stromabnahme an einer Oberleitung dient und die Kontaktkraft von der Positioniereinheit gemessen und geregelt wird.

Eine Positioniereinheit zur Anordnung oberhalb eines Fahrzeugs ist aus der DE 20 2014 007 218 U1 bekannt, wobei die Positioniereinheit eine Gelenkarmvorrichtung und eine Antriebvorrichtung umfasst. Die Antriebvorrichtung weist einen Verstellantrieb und eine Federeinrichtung auf, die dazu dienen, die Gelenkarmvorrichtung relativ zu einer Kontaktfläche des Fahrzeugs zu bewegen. Insbesondere eine Aufwärtsbewegung der Gelenkarmvorrichtung erfordert eine Verstellkraft des Verstellantriebs.

Aus der DE 20 2014 007 218 U1 ist eine Stromübertragungsvorrichtung mit einer Gelenkarmvorrichtung und einer Antriebsvorrichtung zum Antreiben der Gelenkarmvorrichtung bekannt. Die Antriebsvorrichtung umfasst einen Verstellantrieb zur Ausbildung einer auf die Gelenkarmvorrichtung wirkenden Verstellkraft und eine Federeinrichtung, die mit dem Verstellantrieb mechanisch zusammenwirkt und eine Rückstellkraft auf die Gelenkarmvorrichtung ausübt.

Die EP 2 586 645 A2 offenbart eine Positioniereinheit für einen Stromabnehmer zum Stromversorgen eines elektrisch angetriebenen Fahrzeugs, die eine Gelenkarmvorrichtung, eine Antriebsvorrichtung mit einem Verstellantrieb und eine Kontaktfeder umfasst.

Bei den bekannten Positioniereinheiten ist stets nachteilig, dass diese für eine definierte Kontakthöhe, d. h. einen Abstand der Positioniereinheit in einer Einfahrposition zur Verwahrung des Ladekontakts relativ zu einer Kontaktposition zur Stromübertragung auf das Fahrzeugs ausgebildet bzw. angeordnet sein müssen. Das heißt, ein Relativabstand von Kontaktposition und Einfahrposition ist nicht variabel nutzbar und muss regelmäßig eingestellt oder durch konstruktive Änderungen angepasst werden, da sonst nicht die notwendige bzw. gewünschte Kontaktkraft auf die Kontaktfläche aufgebracht werden kann. Dies ist insofern nicht von Bedeutung, solange gleichartig hohe Fahrzeuge die jeweiligen Haltestellen bzw. Ladestationen anfahren. Wechseln jedoch Fahrzeugtypen und damit die Höhen der Fahrzeuge, kann ein Relativabstand von Einfahrposition und Kontaktposition infolge von abweichenden Höhen der Kontaktflächen der Fahrzeuge über einer Fahrbahn stark schwanken. Gleiches gilt für eine unterschiedliche Beladung eines Fahrzeugs. Darüber hinaus können insbesondere Busse im Bereich einer Haltestelle abgesenkt werden, um einen Zugang für beispielsweise Personen mit einer körperlichen Beeinträchtigung zu erleichtern. Dieses Absenken des Busses bewirkt eine Höhenänderung einer Kontaktfläche relativ zur Fahrbahn und, wenn das Absenken nur auf einer Seite des Busses erfolgt, ein Kippen des Busses um seine Längsachse. Folglich bewegt sich dann die Kontaktfläche auf einem Dach des Busses mit dessen Kippbewegung relativ zum Ladekontakt in horizontaler und vertikaler Richtung. So ist es kaum möglich, die für eine sichere elektrische Verbindung gewünschte Kontaktkraft des Ladekontaktes der Ladestation an der Kontaktfläche des Fahrzeugs in den vorbeschriebenen Anwendungsfällen auszubilden. Eine Anpassung einer Kontaktkraft durch den Einsatz von Sensoren und einer Regelung ist hingegen aufwändig und wartungsintensiv, was die Herstellungs- und Betriebskosten einer Positioniereinheit wesentlich erhöhen würde.

Es ist daher Aufgabe der Erfindung, eine Positioniereinheit und ein Verfahren zur Ausbildung einer elektrisch leitenden Verbindung zwischen einem Fahrzeug und einer Ladestation vorzuschlagen die bzw. das eine sichere Kontaktierung des Fahrzeugs bei gleichzeitig niedrigen Anschaffungs- und Betriebskosten ermöglicht.

Diese Aufgabe wird durch eine Positioniereinheit mit den Merkmalen des Anspruchs 1, einer Ladestation mit den Merkmalen des Anspruchs 8 und ein Verfahren mit den Merkmalen des Anspruchs 9 gelöst.

Die erfindungsgemäße Positioniereinheit für eine Ladestation eines elektrisch angetriebenen Fahrzeugs, insbesondere Elektrobus oder dergleichen, ist oberhalb eines Fahrzeugs anordbar ausgebildet, wobei mittels der Positioniereinheit ein elektrischer Ladekontakt der Ladestation relativ zu einer Kontaktfläche des Fahrzeugs bewegbar und mit dieser kontaktierbar ist, wobei die Positioniereinheit eine Gelenkarmvorrichtung und eine Antriebvorrichtung zum Antrieb der Gelenkarmvorrichtung aufweist, wobei die Antriebvorrichtung einen Verstellantrieb zur Ausbildung einer auf die Gelenkarmvorrichtung wirkenden Verstellkraft und eine mit dem Verstellantrieb mechanisch zusammenwirkende Federeinrichtung aufweist, wobei die Federeinrichtung zumindest eine Kontaktfeder umfasst, wobei der Verstellantrieb und die Kontaktfeder in einer mechanischen Reihenschaltung miteinander gekoppelt sind, derart, dass von dem Verstellantrieb und der Kontaktfeder eine Kontaktkraft auf die Kontaktfläche ausbildbar ist.

Die Positioniereinheit ist demnach Bestandteil einer stationären Ladestation für ein elektrisch angetriebenes Fahrzeug und dient dazu, den Ladekontakt der Ladestation auf eine Kontaktfläche des Fahrzeugs, die vorzugsweise auf einem Fahrzeugdach angeordnet ist, zu bewegen und mit dieser elektrisch zu kontaktieren. So ist es dann möglich, das Fahrzeug während einer Fahrtunterbrechung an der Ladestation mit elektrischer Energie zu versorgen und diese im Fahrzeug zu speichern. Die Bewegung des Ladekontaktes auf die Kontaktfläche hin und zurück wird durch die Gelenkarmvorrichtung und die Antriebvorrichtung der Positioniereinheit ausgeführt. Der Ladekontakt ist dazu an einem unteren Ende der Gelenkarmvorrichtung angeordnet. Die Antriebvorrichtung dient dazu, den Ladekontakt und damit die Gelenkarmvorrichtung von einer oberen Einfahrposition zur Verwahrung des Ladekontaktes bis zu einer unteren Kontaktposition zur Stromübertragung bzw. Kontaktierung der Kontaktfläche mit dem Ladekontakt zu bewegen. In der Kontaktposition wird dabei eine definierte Kontaktkraft auf die Kontaktfläche von der Positioniereinheit ausgebildet.

Der Verstellantrieb der Antriebvorrichtung bewirkt auf die Gelenkarmvorrichtung eine Verstellkraft, wobei der Verstellantrieb mechanisch mit der Federeinrichtung zusammenwirkt, sodass allein die Verstellkraft eine Bewegung der Gelenkarmvorrichtung bewirken kann. Die Kontaktfeder ist mit dem Verstellantrieb in einer mechanischen Reihenschaltung gekoppelt, d. h. dass diese direkt oder indirekt miteinander gekoppelt sind. Dabei kann der Verstellantrieb unmittelbar mit der Kontaktfeder oder unter Zwischenschaltung eines weiteren mechanischen Bauelements, wie beispielsweise einem Hebel, verbunden sein. So kann auch von dem Verstellantrieb und der Kontaktfeder gemeinsam eine Kontaktkraft ausgebildet werden, die dann der Ladekontakt auf die Kontaktfläche bewirkt. Durch die mechanische Reihenschaltung von Verstellantrieb und Kontaktfeder wird es möglich, die Gelenkarmvorrichtung durch die Verstellkraft des Verstellantriebs zu bewegen und bei einer Kontaktierung der Kontaktfläche mit dem Ladekontakt die Verstellkraft weiter zu erhöhen. Die weiter erhöhte Verstellkraft wird dann von der mit dem Verstellantrieb verbundenen Kontaktfeder gespeichert und als Kontaktkraft auf die Gelenkarmvorrichtung bzw. die Kontaktfläche übertragen. Die Erhöhung der Verstellkraft wird somit nicht zu einer weitergehenden Bewegung der Gelenkarmvorrichtung, sondern zu einer Ausbildung bzw. Erhöhung der Kontaktkraft auf die Kontaktfläche. Somit wird es möglich, unabhängig von einer Höhe der Kontaktfläche über einer Fahrbahn bzw. von einem Relativabstand von Kontaktfläche und Ladekontakt in einer Einfahrposition des Ladekontakts eine im Wesentlichen stets gleich hohe Kontaktkraft auf die Kontaktfläche auszubilden.

Gemäß der Erfindung ist die Kontaktfeder mit dem Verstellantrieb über ein Loslager gekoppelt sein, wobei die Kontaktfeder oder der Verstellantrieb an einem Festlager gehaltert sein kann. Das Festlager ist dann definitionsgemäß relativ zu weiteren Festlagern der Gelenkarmvorrichtung und der Antriebvorrichtung nicht bewegbar. Das Loslager, das dann die Kontaktfeder mit dem Verstellantrieb unmittelbar verbindet, kann eine oder mehrere Lagerachsen umfassen. Wenn die Kontaktfeder an dem Festlager gehaltert ist, kann der Verstellantrieb mit der Gelenkarmvorrichtung verbunden bzw. gekoppelt sein, und wenn der Verstellantrieb an dem Festlager gehaltert ist, kann die Kontaktfeder mit der Gelenkarmvorrichtung verbunden sein. Prinzipiell ist es unerheblich, ob es sich bei der Kontaktfeder und dem Verstellantrieb um einen translatorisch oder rotatorisch wirkende Feder bzw. wirkenden Verstellantrieb handelt.

Gemäß der Erfindung ist die Kontaktfeder oder der Verstellantrieb über einen Hebel eines Stellgetriebes der Federeinrichtung mit der Gelenkarmvorrichtung mechanisch gekoppelt sein. Der Hebel kann an der Gelenkarmvorrichtung so angeordnet bzw. drehfest mit dieser verbunden sein, dass eine Bewegung des Hebels eine Bewegung der Gelenkarmvorrichtung bewirkt. Dabei ist es zunächst nicht von Bedeutung, ob die Kontaktfeder oder der Verstellantrieb unmittelbar mit dem Hebel verbunden ist. Durch das von dem Hebel ausgebildete Stellgetriebe kann die Verstellkraft und die Federkraft der Kontaktfeder bzw. die resultierende Kontaktkraft auf die Gelenkarmvorrichtung einfach übertragen werden.

Weiter kann die Kontaktfeder über einen Spannhebel eines Spanngetriebes der Federeinrichtung mit dem Verstellantrieb mechanisch gekoppelt sein. Der Spannhebel kann beispielsweise an einem Festlager der Positioniereinheit schwenkbar gehaltert sein, wobei die Kontaktfeder und der Verstellantrieb jeweils an einem gemeinsamen oder an unterschiedlichen Lagerachsen am Spannhebel angreifen bzw. mit diesem verbunden sind. Eine Bewegung des Verstellantriebs wird dann, wenn die Kontaktfläche mit dem Ladekontakt bereits kontaktiert ist und infolgedessen eine Bewegung der Gelenkarmvorrichtung nicht mehr möglich ist, über den Spannhebel des Spanngetriebes auf die Feder übertragen. Die so gespeicherte Federkraft der Kontaktfeder wird infolge der mechanischen Reihenschaltung von Kontaktfeder und Verstellantrieb und deren Verbindung mit der Gelenkarmvorrichtung auf diese bewirkt. Die Federkraft der Kontaktfeder bildet dann die Kontaktkraft auf die Kontaktfläche aus. Wenn die Kontaktkraft um ein Vielfaches größer ist als die Verstellkraft, die zur Bewegung der Gelenkarmvorrichtung erforderlich ist, kann die Kontaktkraft im Wesentlichen immer konstant ausgebildet werden, unabhängig von einer Höhe eines Fahrzeugsdachs relativ zu der Positioniereinheit.

Gemäß der Erfindung ist die Kontaktfeder eine Zugfeder ist. Die Kontaktfeder kann zwar prinzipiell auch eine Druckfeder oder Drehfeder sein, durch die Verwendung einer Zugfeder ist jedoch eine besonders kompakte Positioniereinheit ausbildbar.

Der Verstellantrieb kann eine Pufferbatterie aufweisen. Im Falle eines Stromausfalls oder anderer Fehlfunktionen kann der Verstellantrieb dann aufgrund einer Notstromversorgung durch die Pufferbatterie ein automatisiertes Einfahren der Positioniereinheit in eine Einfahrposition gewährleisten. Die Pufferbatterie kann im Verstellantrieb integriert oder aber auch an anderer Stelle am Fahrzeug angeordnet sein.

Der Verstellantrieb kann ein Linearantrieb, vorzugsweise ein Spindeltrieb, sein. Optional kann auch vorgesehen sein, den Spindeltrieb, je nach Steigung der Spindel, selbsthemmend auszubilden. Die Gelenkarmvorrichtung kann dann leicht in eine gewünschte Position bewegt und ohne weitere Hilfsmittel fixiert werden.

Darüber hinaus kann der Linearantrieb eine Magnetbremse aufweisen. Dies ist besonders vorteilhaft, wenn eine Steigung eines Spindeltriebs keine Selbsthemmung des Antriebs bewirkt bzw. durch auf die Gelenkarmvorrichtung von außen wirkende Kräfte eine Bewegung des Verstellantriebs in unerwünschter Weisung ermöglicht. Mit der Magnetbremse kann dann die erzeugte Kontaktkraft durch Fixierung des Linearantriebs aufrechterhalten werden, wobei bei einer unerwünschten Bewegung des Fahrzeugs der Linearantrieb und damit die Gelenkarmvorrichtung dennoch bewegbar sein kann, wenn eine Bremskraft der Magnetbremse am Linearantrieb überschritten wird. Beschädigungen des Linearantriebs und der Gelenkarmvorrichtung können so vermieden werden. Im Falle eines Stromausfalls oder anderer Fehlfunktionen kann die Magnetbremse auch ihre magnetische Wirkung verlieren, so dass der Verstellantrieb freigängig wird. Die Positioniereinheit kann dann mittels einer Hubfeder und/oder durch eine Notstromversorgung des Verstellantriebs bzw. den Linearantrieb in eine Einfahrposition bewegt werden. Die Magnetbremse kann als eine Arbeitsstrombremse oder eine Ruhestrombremse mit magnetischer Wirkung ausgebildet sein.

Der Linearantrieb kann einen Wegsensor aufweisen. Durch eine Verwendung des Wegsensors ist es möglich, einen Bereich einzustellen, innerhalb dem die Gelenkarmvorrichtung mithilfe des Linearantriebs bewegbar ist. Als Wegsensor kann beispielsweise eine Inkremental- oder Absolutwertgeber verwendet werden. Es ist dann auch möglich immer eine genaue Arbeitsposition des Linearantriebs zu bestimmen. Der Linearantrieb kann auch positionsabhängig betätigbare Endlagenschalter und/oder kraftabhängig betätigbare Druckschalter aufweisen. Darüber hinaus kann auch eine Höhe einer Kontaktkraft dadurch begrenzt werden, dass der Linearantrieb nur bis hin zu einer bestimmten Endlage ausfahren kann. Weiter können auch ergänzend Druckschalter zur Begrenzung der Kontaktkraft genutzt werden, die allein oder zusammen mit den Endlagenschaltern zur Begrenzung des Linearantriebs dienen können. Ein Druckschalter kann unmittelbar am Ladekontakt oder aber auch an der Antriebsvorrichtung im Bereich der Federeinrichtung oder des Verstellantriebs angeordnet sein.

Die Gelenkarmvorrichtung ist als ein Einarmsystem oder als ein mehrteiliges Scherensystem, vorzugsweise mit einer Parallelogrammführung, oder als ein Pantograph ausgebildet. So kann das Gelenkarmsystem eine parallele Bewegung des Ladekontakts ausgehend von einer Einfahrposition des Ladekontakts bis hin zu der Kontaktposition an der Kontaktfläche des Fahrzeugs ermöglichen. An der Gelenkarmvorrichtung können zusätzlich Dämpferelemente angeordnet sein, die einen ruckfreien Bewegungsablauf sicherstellen.

Nach einer Kontaktierung der Kontaktfläche mit dem Ladekontakt kann eine Rückführung des Ladekontakts in eine Einfahrposition an der Positioniereinheit einfach durchgeführt werden, wenn die Federeinrichtung zumindest eine Hubfeder zur Ausbildung einer Rückstellkraft auf die Gelenkarmvorrichtung umfasst, wobei die Rückstellkraft größer sein kann als eine auf die Hubfeder entgegengesetzt wirkende Gewichtskraft der Gelenkarmvorrichtung. So kann eine Gewichtskraft der Gelenkarmvorrichtung und des an der Gelenkarmvorrichtung angeordneten Ladekontakts bewirken, dass sich die Gelenkarmvorrichtung von der Einfahrposition in die Kontaktposition bewegt, ohne dass dies erwünscht wäre. Die Hubfeder kann dies verhindern, wenn diese eine Rückstellkraft auf die Gelenkarmvorrichtung bewirkt. Die Rückstellkraft wirkt der Gewichtskraft entgegen und ist vorzugsweise geringfügig größer als diese, um ein Absinken bzw. Ausfahren des Ladekontakts zu verhindern, wenn die Gelenkarmvorrichtung mit keiner weiteren Kraft beaufschlagt wird.

Gemäß der Erfindung ist die Hubfeder eine Zugfeder ist. Es ist dann möglich, die Positioniereinheit besonders kompakt auszubilden. Gleichwohl ist es möglich, anstelle einer Zugfeder eine Druckfeder oder auch eine Drehfeder bzw. Spiralfeder zu verwenden. Anstelle einer einzelnen Feder können auch eine Mehrzahl von in einer mechanischen Parallelschaltung miteinander gekoppelten Federn eingesetzt werden.

Die Hubfeder ist über einen Hebel eines Rückstellgetriebes der Federeinrichtung mit der Gelenkarmvorrichtung mechanisch gekoppelt, wobei in Abhängigkeit einer Position der Gelenkarmvorrichtung eine wirksame Länge des Hebels veränderbar ausgebildet ist. Der Hebel kann folglich unmittelbar an der Gelenkarmvorrichtung befestigt sein, sodass eine Federkraft der Hubfeder direkt auf die Gelenkarmvorrichtung übertragbar ist. Je nach Lage bzw. Richtung der Federkraft der Hubfeder und Anordnung des Hebels an der Gelenkarmvorrichtung kann die wirksame Länge des Hebels verkürzt werden, wenn ein zwischen der Richtung der Federkraft und der Erstreckung des Hebels ausgebildeter Winkel kleiner oder größer als 90° ist. Eine wirksame Länge des Hebels lässt sich auch dadurch verändern, dass die Hubfeder über ein Rückstellgetriebe beispielsweise ausgebildet durch eine Kurvenscheibe oder eine Zugstange mit einem Anschlag an der Gelenkarmvorrichtung befestigt ist. Die Kurvenscheibe bildet dann den Hebel des Rückstellgetriebes aus. Je nach Lage der Kurvenscheibe relativ zur Hubfeder kann die wirksame Länge des Hebels beeinflusst werden. So ist es möglich, unabhängig von einer Position der Gelenkarmvorrichtung stets die gleiche Rückstellkraft auf die Gelenkarmvorrichtung zu bewirken oder in Abhängigkeit einer Position der Gelenkarmvorrichtung die Rückstellkraft nach den jeweiligen Erfordernissen zu erhöhen oder zu vermindern. Die Rückstellkraft kann auch an die Verstellkraft und die Kontaktkraft angepasst werden. Vorteilhaft ist es, wenn die Rückstellkraft so bemessen ist, dass in jeder Position der Gelenkarmvorrichtung bei einem Ausfall des Verstellantriebs, beispielsweise bewirkt durch einen Stromausfall, ein Einfahren des Ladekontakts infolge der Rückstellkraft selbsttätig erfolgt. Die Positioniereinheit kann damit besonders sicher betrieben werden.

Die Positioniereinheit kann einen Halterahmen zur Befestigung der Positioniereinheit an einem Mast oder einer Unterquerung umfassen. Der Halterahmen kann beispielsweise Festlager für die Gelenkarmvorrichtung und die Antriebvorrichtung ausbilden bzw. aufweisen. Insbesondere kann die Kontaktfeder oder der Verstellantrieb unmittelbar an einem Festlager am Halterahmen befestigt sein. Der Halterahmen kann auch besonders einfach an dem Mast oder der Unterquerung sowie an einer Überdachung einer Haltestelle, einem Tunnel oder ähnlichen Einrichtungen, die von einem Fahrzeug unterfahren werden können, befestigt werden.

Besonders vorteilhaft ist es, wenn die Positioniereinheit eine Schwenkeinrichtung aufweist, mittels der in einer Einfahrposition der Positioniereinheit zur Verwahrung des Ladekontaktes der Ladekontakt von einer vertikalen Kontaktlage in einer Verwahrlage verschwenkbar ist. Wenn beispielsweise der Ladekontakt vergleichsweise große Abmessungen aufweist, beispielsweise mit dachförmigen Führungsflächen zum Heranführen an die Kontaktfläche, kann die Schwenkeinrichtung den Ladekontakt von der vertikalen Kontaktlage in die Verwahrlage verschwenken, wobei der Ladekontakt vorzugsweise horizontal positioniert verwahrt werden kann. Die Positioniereinheit weist damit in der Einfahrposition eine besonders flache Gestalt auf und kann auch von anderen Fahrzeugen mit großer Höhe, wie beispielsweise LKW, leicht unterfahren werden, ohne dass die Gefahr einer Kollision mit der Positioniereinheit bestünde. Die Schwenkeinrichtung kann beispielsweise eine Kurvenscheibe umfassen, die mit einem Hebel zusammenwirkt, der an einem unteren Ende der Gelenkarmvorrichtung angeordnet ist. Beim Bewegen in die Einfahrposition kann der Hebel in die Kurvenscheibe eingreifen und bei einem Ablauf an der Kurvenscheibe verschwenkt werden. Diese Schwenkbewegung kann zum Verschwenken des Ladekontaktes, der an dem unteren Ende der Gelenkarmvorrichtung befestigt ist, genutzt werden. In einfacheren Ausführungsformen ist es auch denkbar, allein einen Hebel oder eine Kurvenscheibe zur Ausbildung der Schwenkeinrichtung zu verwenden.

Die erfindungsgemäße Ladestation umfasst einen elektrischen Ladekontakt sowie die erfindungsgemäße Positioniereinheit. Vorteilhafte Ausführungsformen einer Ladestation ergeben sich aus den auf den Anspruch 1 rückbezogenen Unteransprüchen.

Bei dem erfindungsgemäßen Verfahren zur Ausbildung einer elektrisch leitenden Verbindung zwischen einem Fahrzeug, insbesondere Elektrobus oder dergleichen, und einer Ladestation wird mittels einer Positioniereinheit oberhalb eines Fahrzeugs ein elektrischer Kontakt der Ladestation relativ zu einer Kontaktfläche des Fahrzeugs bewegt und mit dieser kontaktiert, wobei eine Gelenkarmvorrichtung der Positioniereinheit von einer Antriebvorrichtung der Positioniereinheit angetrieben wird, wobei ein Verstellantrieb der Antriebvorrichtung eine Verstellkraft auf die Gelenkarmvorrichtung bewirkt und eine Federeinrichtung der Antriebvorrichtung mit dem Verstellantrieb mechanisch zusammenwirkt, wobei der Verstellantrieb und eine Kontaktfeder der Federeinrichtung in einer mechanischen Reihenschaltung miteinander gekoppelt sind, und von dem Verstellantrieb und der Kontaktfeder eine Kontaktkraft auf die Kontaktfläche ausgebildet wird. Hinsichtlich der vorteilhaften Wirkungen des Verfahrens wird auf die Vorteilsbeschreibung der erfindungsgemäßen Positioniereinheit verwiesen.

Der Ladekontakt kann mittels der Gelenkarmvorrichtung und der Antriebvorrichtung zwischen einer Kontaktposition zur Stromübertragung, einer Ausfahrposition zur Stromunterbrechung und einer Einfahrposition zur Verwahrung des Ladekontakts positioniert werden. Dabei kann vorgesehen sein, dass in der Kontaktposition die Kontaktkraft auf die Kontaktfläche aufgebracht wird und in der Ausfahrposition, die jede Position zwischen der Kontaktposition und der Einfahrposition betreffen kann, allein die Verstellkraft auf die Gelenkarmvorrichtung wirkt. In der Einfahrposition kann dann keine oder nur eine sehr geringe Verstellkraft auf die Gelenkarmvorrichtung wirken, sodass eine Abwärtsbewegung der Gelenkarmvorrichtung bzw. des Ladekontakts nicht möglich ist.

Vorteilhaft kann die Kontaktposition unabhängig von einem Relativabstand der Kontaktfläche des Fahrzeugs unterhalb der Positioniereinheit zu der Einfahrposition der Positioniereinheit ausgebildet werden. So wird es möglich, auch Fahrzeuge mit unterschiedlichen Höhen relativ zu einer Fahrbahn mit der Positioniereinheit zu kontaktieren. Vorzugsweise kann die Kontaktfläche des Fahrzeugs auf einem Fahrzeugdach oder an einer anderen geeigneten Stelle auf einer Oberseite des Fahrzeugs angeordnet sein.

Besonders vorteilhaft ist es, wenn in der Kontaktposition während einer Änderung eines Relativabstandes der Kontaktfläche des Fahrzeugs unterhalb der Positioniereinheit zu der Einfahrposition der Positioniereinheit die Kontaktkraft konstant ausgebildet wird. Eine Änderung des Relativabstands der Kontaktfläche hat auch eine Änderung des Abstands der Kontaktfläche zu einer Fahrbahn zur Folge. Eine Änderung des Relativabstands kann durch eine Absenkung des Fahrzeugs über ein Fahrwerk oder durch eine Beladung des Fahrzeugs hervorgerufen werden. Dadurch, dass die Kontaktkraft relativ zur Verstellkraft vergleichsweise groß ist, kann die Kontaktkraft im Wesentlichen konstant ausgebildet werden, auch wenn der Relativabstand verändert wird. Eine konstante Kontaktkraft kann noch einfacher unabhängig von dem Relativabstand ausgebildet werden, wenn in Abhängigkeit einer Position der Gelenkarmvorrichtung wirksame Längen von Hebeln, an denen die Kontaktfeder und/oder der Verstellantrieb angreifen, verändert werden.

Zum Ausbilden der Kontaktkraft in der Kontaktposition kann der Verstellantrieb in eine Verstellposition mit einem maximalen Verstellweg bewegt werden, wobei die Kontaktkraft von der Kontaktfeder auf den Verstellantrieb übertragen werden kann. Wenn der Verstellantrieb ein Linearantrieb ist, kann der Verstellantrieb zwischen einem maximalen Verstellweg und einem minimalen Verstellweg bewegt werden. In der Einfahrposition kann sich der Verstellantrieb in der Verstellposition mit dem minimalen Verstellweg befinden. Eine Bewegung der Gelenkarmvorrichtung in die Ausfahrposition wird dadurch bewirkt, dass der Verstellantrieb den Verstellweg vergrößert und so die Verstellkraft auf die Gelenkarmvorrichtung bewirkt und diese bewegt. Die Kontaktfeder ist dabei unbelastet, da diese in der mechanischen Reihenschaltung mit dem Verstellantrieb gekoppelt ist. Es ist jedoch auch möglich die Kontaktfeder in den vorstehend beschriebenen Positionen bereits vorzuspannen, beispielsweise durch einen Spannhebel. Nach Erreichen der Kontaktposition kann die Gelenkarmvorrichtung nicht weiter bewegt werden, sodass eine weitere Vergrößerung des Verstellweges bis hin zum maximalen Verstellweg dazu führt, dass die Kontaktfeder von dem Verstellantrieb vorgespannt wird. Ist die Kontaktfeder bereits vorgespannt, wird die Vorspannung dann vergrößert. Die so von der Kontaktfeder bewirkte Federkraft wirkt direkt oder indirekt über den Verstellantrieb auf die Gelenkarmvorrichtung und bewirkt die Kontaktkraft an der Kontaktfläche. So wird es möglich, unabhängig von einer Relativposition des Ladekontaktes in der Kontaktposition stets eine weitestgehend konstante Kontaktkraft zu erzeugen, ohne dass eine Messung der Kontaktkraft oder besondere Einstellungen in der Positioniereinheit an zu kontaktierende Fahrzeuge erforderlich wäre.

Weitere Ausführungsformen des Verfahrens ergeben sich aus den auf den Vorrichtungsanspruch 1 rückbezogenen Unteransprüchen.

Nachfolgend wird eine bevorzugte Ausführungsform der Erfindung unter Bezugnahme auf die beigefügten Zeichnungen näher erläutert.

### Es zeigen:

- **Fig. la**: eine Positioniereinheit in einer Einfahrposition in einer Seitenansicht von links;

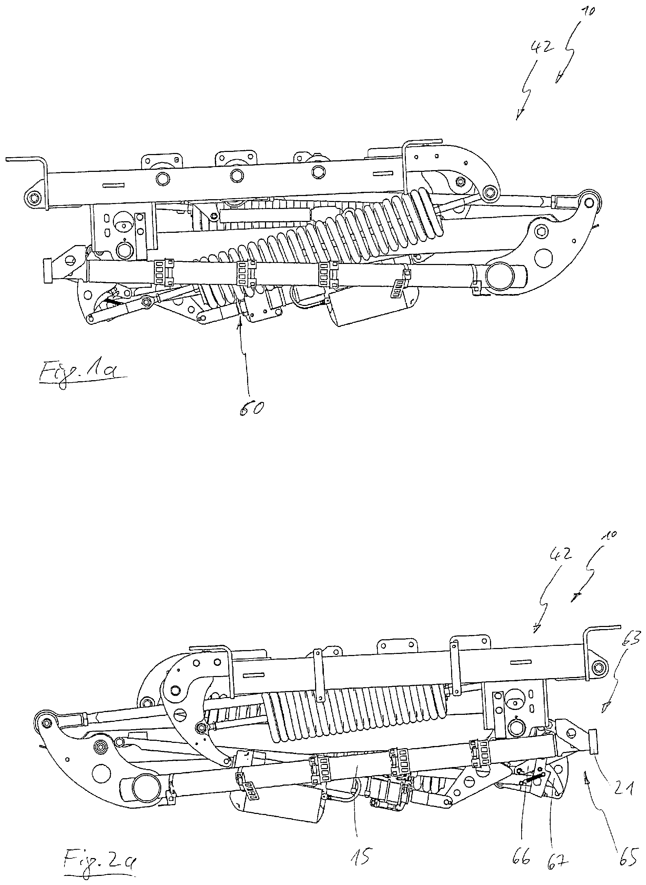

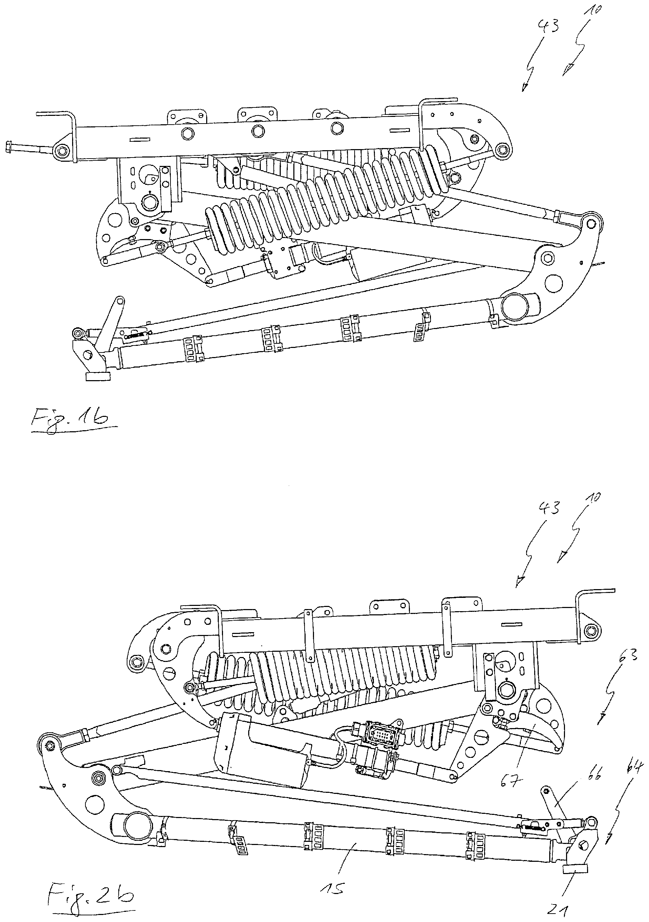

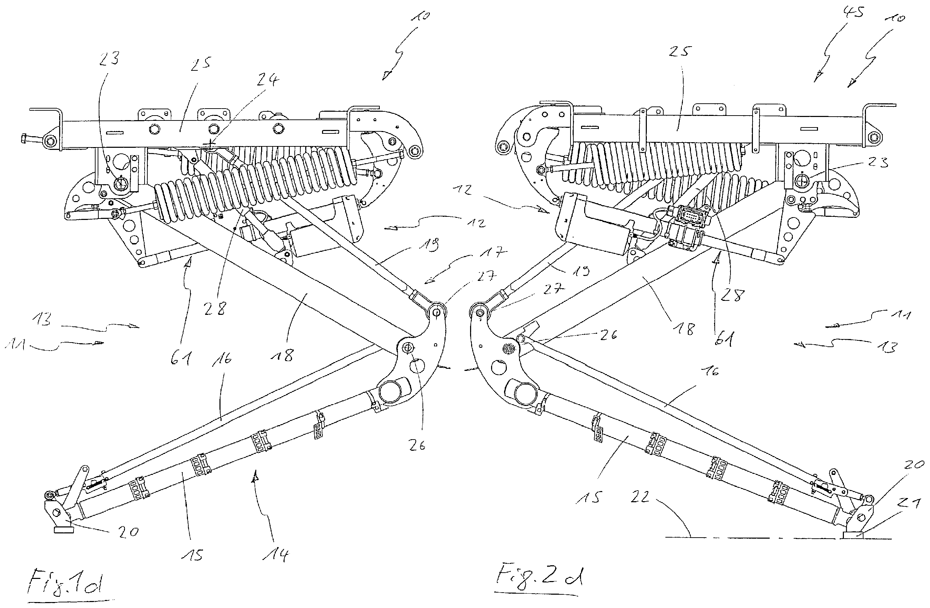

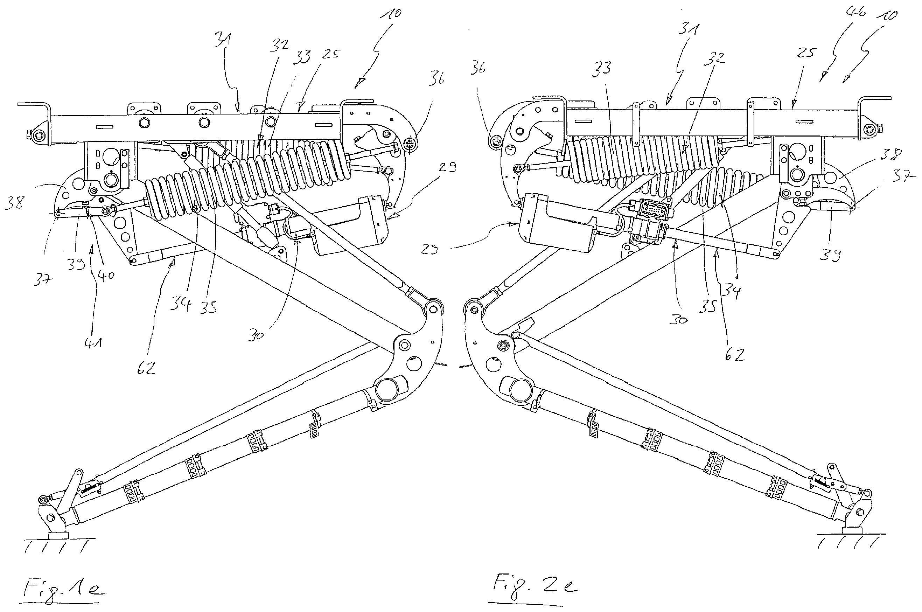

- **Fig. 1b**: die Positioniereinheit in einer oberen Ausfahrposition in einer Seitenansicht von links;

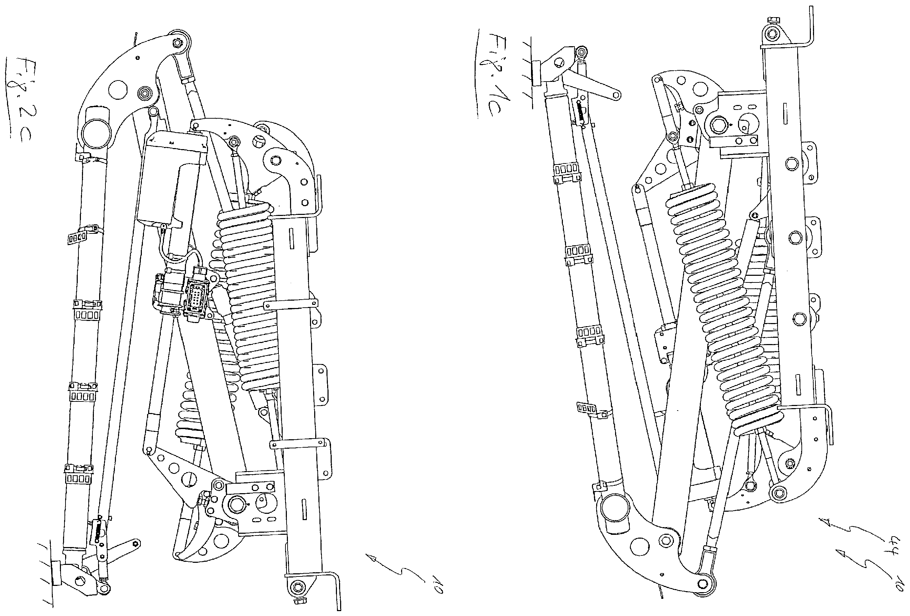

- **Fig. 1c**: die Positioniereinheit in einer oberen Kontaktposition in der Seitenansicht von links;
- **Fig. Id**: die Positioniereinheit in einer mittleren Ausfahrposition in der Seitenansicht von links;
- **Fig. le**: die Positioniereinheit in einer mittleren Kontaktposition in der Seitenansicht von links;

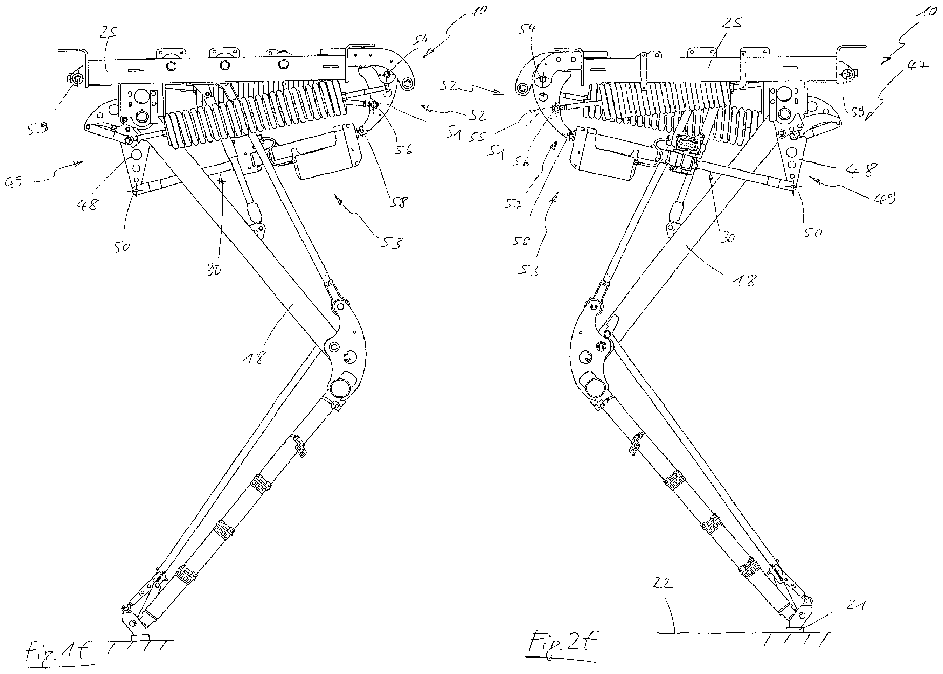

- **Fig. 1f**: die Positioniereinheit in einer unteren Kontaktposition in der Seitenansicht von links;
- **Fig. 2a**: eine Positioniereinheit in der Einfahrposition in einer Seitenansicht von rechts;
- **Fig. 2b**: die Positioniereinheit in der oberen Ausfahrposition in einer Seitenansicht von rechts;
- **Fig. 2c**: die Positioniereinheit in der oberen Kontaktposition in der Seitenansicht von rechts;
- **Fig. 2d**: die Positioniereinheit in der mittleren Ausfahrposition in der Seitenansicht von rechts;
- **Fig. 2e**: die Positioniereinheit in der mittleren Kontaktposition in der Seitenansicht von rechts;
- **Fig. 2f**: die Positioniereinheit in der unteren Kontaktposition in der Seitenansicht von rechts;
- **Fig. 3**: die Positioniereinheit in der Einfahrposition in der Seitenansicht von rechts;
- **Fig. 4**: die Positioniereinheit in der oberen Kontaktposition in der Seitenansicht von rechts;
- **Fig. 5**: die Positioniereinheit in der unteren Kontaktposition in der Seitenansicht von rechts.

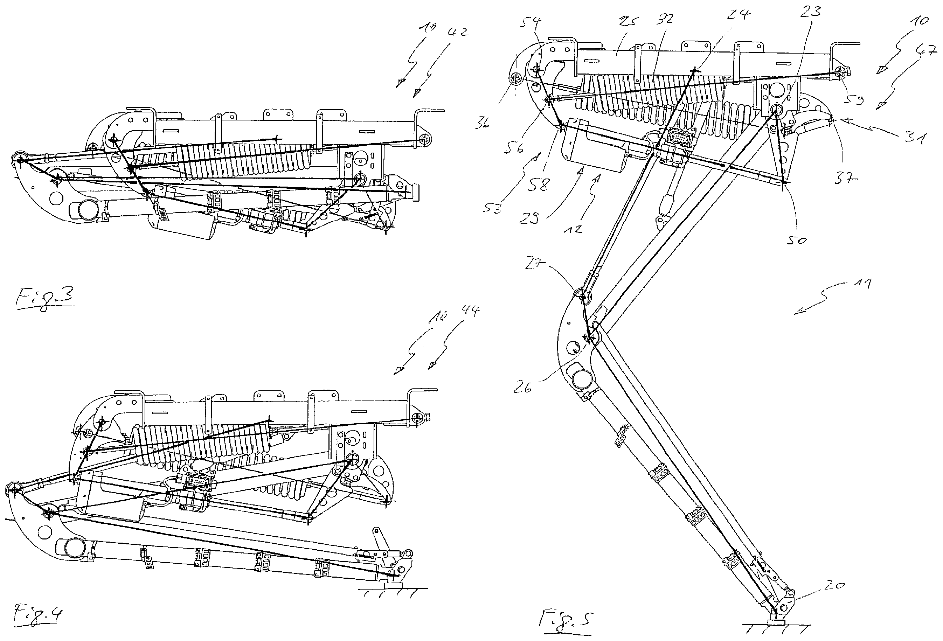

Eine Zusammenschau der **Fig. la** bis **2f** zeigt eine Positioniereinheit 10 in verschiedenen Ansichten und Positionen. Die **Fig. 3** bis **5** zeigen die Positioniereinheit 10 in einer schematisch ergänzten Darstellung. Eine Kontaktierung einer hier nicht dargestellten Kontaktfläche ist hier lediglich symbolisch veranschaulicht. Die Positioniereinheit 10 umfasst eine Gelenkarmvorrichtung 11 und eine Antriebvorrichtung 12 zum Antrieb der Gelenkarmvorrichtung 11. Die Gelenkarmvorrichtung 11 ist als ein Einarmsystem 13 ausgebildet und umfasst eine Oberschere 14 mit einem Oberscherenarm 15 und einer oberen Kuppelstange 16 sowie eine Unterschere 17 mit einem Unterscherenarm 18 und einer unteren Kuppelstange 19. An dem oberen Scherenarm 15 ist ein oberes Koppelglied 20 schwenkbar befestigt, sodass ein Halter 21 der Positioniereinheit 10 für einen hier nicht dargestellten elektrischen Ladekontakt einer hier ebenfalls nicht dargestellten Ladestation stets parallel zu einer horizontalen Ebene 22 bewegt werden kann. Zu diesem Zweck ist das obere Koppelglied 20 mit der oberen Kuppelstange 16 verbunden. Der Unterscherenarm 18 und die untere Kuppelstange 19 sind jeweils an Festlagern 23 bzw. 24 an einem Halterahmen 25 der Positioniereinheit 10 schwenkbar befestigt. Der Unterscherenarm 18 ist über eine Achse 26 mit dem Oberscherenarm 15 und die untere Kuppelstange 19 über eine Achse 27 mit dem Oberscherenarm 15 schwenkbar verbunden. Eine Schwenkbewegung des Oberscherenarms 15 führt folglich zu einer parallelen Bewegung des Halters 21 relativ zur horizontalen Ebene 22. An dem Unterscherenarm 18 ist zur Dämpfung einer Bewegung ein Dämpferelement 28 angebracht.

Die Antriebvorrichtung 12 umfasst einen Verstellantrieb 29, der als ein Linearantrieb 30 ausgebildet ist, sowie eine Federeinrichtung 31 mit einer Kontaktfeder 32, die als Zugfeder 33 ausgebildet ist, und eine Hubfeder 34, die als Zugfeder 35 ausgebildet ist. Die Hubfeder 34 ist an einem Festlager 36 an dem Halterahmen 25 und an einer Achse 37 eines Hebels 38 befestigt. Ein Befestigungsabschnitt 39 verbindet den Hebel 38 mit der Hubfeder 34. Der Hebel 38 bildet zusammen mit dem Befestigungsabschnitt 39 und einem Anschlag 40 ein Rückstellgetriebe 41 aus. Je nach Position der Gelenkarmvorrichtung 11 wird der mit dem Unterscherenarm 18 drehfest verbundene Hebel 38 relativ zur Hubfeder 34 verschwenkt, sodass eine wirksame Länge des Hebels 38 verkürzt oder verlängert wird. In einer Einfahrposition 42, einer oberen Ausfahrposition 43 und einer oberen Kontaktposition 44 der Positioniereinheit 10 wirkt die Hubfeder 34 unmittelbar auf die Achse 37. In einer mittleren Ausfahrposition 45, einer mittleren Kontaktposition 46 und einer unteren Kontaktposition 47 der Positioniereinheit 10 liegt der Befestigungsabschnitt 39 an dem Anschlag 40 an, sodass eine wirksame Länge des Hebels 38 durch Verschwenken desselben wesentlich verkürzt ist. So ist es möglich, die Hubfeder 34 bzw. deren wirksame Rückstellkraft an eine Position der Positioniereinheit 10 anzupassen. Die Gelenkarmvorrichtung 11 weist zusammen mit der Antriebvorrichtung 12 eine konstruktionsbedingte Gewichtskraft einschließlich eines hier nicht dargestellten Ladekontaktes auf, die auf den Ladekontakt bzw. den Halter 21 wirkt. Die Hubfeder 34 bewirkt eine Federkraft bzw. eine Rückstellkraft, die die Gewichtskraft überschreitet, sodass unabhängig von einer Position der Positioniereinheit 10 auch bei einem Stromausfall eine Rückholung der Positioniereinheit 10 in die Einfahrposition 42 stets sichergestellt ist.

An der Gelenkarmvorrichtung 11 bzw. dem Unterscherenarm 18 ist ein Hebel 48 fest fixiert, der ein Stellgetriebe 49 für die Gelenkarmvorrichtung 11 ausbildet. An einer Achse 50 des Hebels 48 ist der Linearantrieb 30 schwenkbar befestigt. Der Linearantrieb 30 ist weiter über einen Spannhebel 51 eines Spanngetriebes 52 mit der Kontaktfeder 32 in einer mechanischen Reihenschaltung 53 verbunden. So ist der Spannhebel 51 an einem Festlager 54 an dem Halterahmen 25 schwenkbar befestigt, wobei an einem Mittenabschnitt 55 des Spannhebels 51 eine Achse 56 und an einem Endabschnitt 57 des Spannhebels 51 eine Achse 58 angeordnet ist. Die Kontaktfeder 32 ist an einem Festlager 59 an dem Halterahmen 25 und der Achse 56 befestigt, wobei der Linearantrieb 30 an der Achse 58 am Spannhebel 51 und an der Achse 50 am Hebel 48 befestigt ist.

In der Einfahrposition 42 weist der Linearantrieb 30 einen minimalen Verstellweg 60 auf, sodass keine Verstellkraft auf den Hebel 48 bewirkt wird. Die Kontaktfeder 32 ist ebenfalls entspannt. In der beispielsweise mittleren Ausfahrposition 45 weist der Linearantrieb 30 einen mittleren Verstellweg 61 auf und bewirkt somit eine Verstellkraft auf den Hebel 48, wodurch die Rückstellkraft der Hubfeder 34 überwunden wurde und die Gelenkarmvorrichtung 11 in die mittlere Ausfahrposition 45 bewegt werden konnte. Die Verstellkraft ist dabei so groß, dass die Rückstellkraft durch eine Summe der Gewichtskraft und der Verstellkraft überwunden wird. In beispielsweise der mittleren Kontaktposition 46 weist der Linearantrieb 30 einen maximalen Verstellweg 62 auf, wobei sich hier eine Lage des Hebels 48 gegenüber der mittleren Ausfahrposition 45 nicht geändert hat. Der maximale Verstellweg 62 bewirkt ein Verschwenken des Spannhebels 51 um das Festlager 54 derart, dass die Kontaktfeder 32 gespannt wird. Die sich aus der so erzeugten Federspannung ergebende Federkraft wirkt infolge der mechanischen Reihenschaltung 53 von Kontaktfeder 32 und Linearantrieb 30 auf den Hebel 48 und damit auf die Gelenkarmvorrichtung 11, wodurch in Folge eine Kontaktkraft auf den Halter 21 bzw. den hier nicht gezeigten Ladekontakt bewirkt wird. Die Kontaktkraft ist zur Ausbildung eines elektrischen Ladekontakts ausreichend hoch und kann in der oberen Kontaktposition 44, in der mittleren Kontaktposition 46 und der unteren Kontaktposition 47 sowie in jeder anderen beliebigen Kontaktposition zwischen den hier gezeigten Kontaktpositionen im Wesentlichen konstant bzw. in jeweils gleicher Höhe ausgebildet werden.

Die Positioniereinheit 10 verfügt weiter über eine Schwenkeinrichtung 63 für den hier nicht dargestellten Ladekontakt bzw. für den Halter 21. Mittels der Schwenkeinrichtung 63 ist der Halter 21 von einer vertikalen Kontaktlage 64 parallel zur horizontalen Ebene 22 in eine Verwahrlage 65 in der Einfahrposition 42 horizontal verschwenkbar. Die Schwenkeinrichtung 63 umfasst einen Hebel 66 an dem oberen Koppelglied 20 und eine Kurvenscheibe 67, fest angeordnet am Unterscherenarm 18. Bei einer Rückführung der Gelenkarmvorrichtung 11 in die Einfahrposition 42 greift der Hebel 66 in die Kurvenscheibe 67 ein, derart, dass der Hebel 66 an der Kurvenscheibe 67 entlang gleitet und verschwenkt wird. Das Verschwenken des Hebels 66 bewirkt eine Drehung des Halters 21 bzw. des oberen Koppelglieds 20 in die Verwahrlage 65 um ca. 90°.

## Patentansprüche

1. Positioniereinheit (10) für eine Ladestation eines elektrisch angetriebenen Fahrzeugs, insbesondere Elektrobus oder dergleichen, wobei die Positioniereinheit oberhalb eines Fahrzeugs anordbar ausgebildet ist, wobei mittels der Positioniereinheit ein elektrischer Ladekontakt der Ladestation relativ zu einer Kontaktfläche des Fahrzeugs bewegbar und mit dieser kontaktierbar ist, wobei die Positioniereinheit eine Gelenkarmvorrichtung (11) und eine Antriebvorrichtung (12) zum Antrieb der Gelenkarmvorrichtung aufweist, wobei die Antriebvorrichtung einen Verstellantrieb (29) zur Ausbildung einer auf die Gelenkarmvorrichtung wirkenden Verstellkraft und eine mit dem Verstellantrieb (29) mechanisch zusammenwirkende Federeinrichtung (31) aufweist,
wobei
die Federeinrichtung zumindest eine Kontaktfeder (32) umfasst, wobei der Verstellantrieb (29) und die Kontaktfeder (32) in einer mechanischen Reihenschaltung (53) miteinander gekoppelt sind, derart, dass von dem Verstellantrieb (29) und der Kontaktfeder (32) eine Kontaktkraft auf die Kontaktfläche ausbildbar ist, wobei die Kontaktfeder (32) mit dem Verstellantrieb (29) über ein Loslager (56, 58) unmittelbar gekoppelt ist, wobei die Kontaktfeder (32) oder der Verstellantrieb an einem Festlager (59) gehaltert ist, wobei
die Kontaktfeder (32) oder der Verstellantrieb (29) über einen Hebel (48) eines Stellgetriebes (49) der Federeinrichtung (31) mit der Gelenkarmvorrichtung (11) mechanisch gekoppelt ist, dass die Kontaktfeder (32) eine Zugfeder (33) ist, die über einen Spannhebel (51) eines Spanngetriebes (52) der Federeinrichtung (31) mit dem Verstellantrieb (29) mechanisch gekoppelt ist, dass die Gelenkarmvorrichtung (11) als ein Einarmsystem (13) oder als ein Scherensystem, vorzugsweise mit einer Parallelogrammführung, oder als ein Pantograph ausgebildet ist, dass die Federeinrichtung (31) zumindest eine Hubfeder (34), die eine Zugfeder (35) ist, zur Ausbildung einer Rückstellkraft auf die Gelenkarmvorrichtung (11) umfasst, dass die Rückstellkraft größer ist als eine auf die Hubfeder (34) entgegengesetzt wirkende Gewichtskraft der Gelenkarmvorrichtung, und dass die Hubfeder (34) über einen Hebel (38) eines Rückstellgetriebes (41) der Federeinrichtung (31) mit der Gelenkarmvorrichtung (11) mechanisch gekoppelt ist, wobei in Abhängigkeit einer Position (42, 43, 44, 45, 46, 47) der Gelenkarmvorrichtung eine wirksame Länge des Hebels (38) veränderbar ausgebildet ist.

2. Positioniereinheit nach einem der vorangehenden Ansprüche, **dadurch gekennzeichnet,**
**dass** der Verstellantrieb (29) eine Pufferbatterie aufweist.

3. Positioniereinheit nach einem der vorangehenden Ansprüche, **dadurch gekennzeichnet,**
**dass** der Verstellantrieb (29) ein Linearantrieb (30), vorzugsweise ein Spindeltrieb ist.

4. Positioniereinheit nach Anspruch 3,
**dadurch gekennzeichnet,**
**dass** der Linearantrieb (30) eine Magnetbremse aufweist.

5. Positioniereinheit nach Anspruch 3 oder 4,
**dadurch gekennzeichnet,**
**dass** der Linearantrieb (30) einen Wegsensor aufweist.

6. Positioniereinheit nach einem der vorangehenden Ansprüche,
**dadurch gekennzeichnet,**
**dass** die Positioniereinheit (10) einen Halterahmen (25) zur Befestigung der Positioniereinheit an einem Mast oder einer Unterquerung umfasst.

7. Positioniereinheit nach einem der vorangehenden Ansprüche,
**dadurch gekennzeichnet,**
**dass** die Positioniereinheit (10) eine Schwenkeinrichtung (63) aufweist, mittels der in einer Einfahrposition (42) der Positioniereinheit zur Verwahrung des Ladekontaktes der Ladekontakt von einer vertikalen Kontaktlage (64) in eine Verwahrlage (65) verschwenkbar ist.

8. Ladestation, umfassend einen elektrischen Ladekontakt und eine Positioniereinheit (10) nach einem der vorangehenden Ansprüche.

9. Verfahren zur Ausbildung einer elektrischen leitenden Verbindung zwischen einem Fahrzeug, insbesondere Elektrobus oder dergleichen, und einer Ladestation, wobei mittels einer Positioniereinheit (10) oberhalb eines Fahrzeugs ein elektrischer Ladekontakt der Ladestation relativ zu einer Kontaktfläche des Fahrzeugs bewegt und mit dieser kontaktiert wird, wobei eine Gelenkarmvorrichtung (11) der Positioniereinheit von einer Antriebvorrichtung (12) der Positioniereinheit angetrieben wird, wobei ein Verstellantrieb (29) der Antriebvorrichtung eine Verstellkraft auf die Gelenkarmvorrichtung bewirkt und eine Federeinrichtung (31) der Antriebvorrichtung mit dem Verstellantrieb mechanisch zusammenwirkt,
wobei der Verstellantrieb und eine Kontaktfeder (32) der Federeinrichtung in einer mechanischen Reihenschaltung (53) miteinander gekoppelt sind, von dem Verstellantrieb und der Kontaktfeder eine Kontaktkraft auf die Kontaktfläche ausgebildet wird, die Kontaktfeder (32) mit dem Verstellantrieb (29) über ein Loslager (56, 58) unmittelbar gekoppelt ist und die Kontaktfeder (32) oder der Verstellantrieb an einem Festlager (59) gehaltert wird, wobei
die Kontaktfeder (32) oder der Verstellantrieb (29) über einen Hebel (48) eines Stellgetriebes (49) der Federeinrichtung (31) mit der Gelenkarmvorrichtung (11) mechanisch gekoppelt wird, dass die Kontaktfeder (32) eine Zugfeder (33) ist, die über einen Spannhebel (51) eines Spanngetriebes (52) der Federeinrichtung (31) mit dem Verstellantrieb (29) mechanisch gekoppelt wird, dass die Gelenkarmvorrichtung (11) als ein Einarmsystem (13) oder als ein Scherensystem, vorzugsweise mit einer Parallelogrammführung, oder als ein Pantograph ausgebildet ist, dass die Federeinrichtung (31) zumindest eine Hubfeder (34), die eine Zugfeder (35) ist, zur Ausbildung einer Rückstellkraft auf die Gelenkarmvorrichtung (11) umfasst, dass die Rückstellkraft größer ist als eine auf die Hubfeder (34) entgegengesetzt wirkende Gewichtskraft der Gelenkarmvorrichtung, und dass die Hubfeder (34) über einen Hebel (38) eines Rückstellgetriebes (41) der Federeinrichtung (31) mit der Gelenkarmvorrichtung (11) mechanisch gekoppelt wird, wobei in Abhängigkeit einer Position (42, 43, 44, 45, 46, 47) der Gelenkarmvorrichtung eine wirksame Länge des Hebels (38) veränderbar ausgebildet wird.

10. Verfahren nach Anspruch 9,
**dadurch gekennzeichnet,**
**dass** der Ladekontakt mittels der Gelenkarmvorrichtung (11) und der Antriebvorrichtung (12) zwischen einer Kontaktposition (44, 46, 47) zur Stromübertragung, einer Ausfahrposition (43, 45) zur Stromunterbrechung und einer Einfahrposition (42) zur Verwahrung des Ladekontaktes positioniert wird.

11. Verfahren nach Anspruch 10,
**dadurch gekennzeichnet,**
**dass** die Kontaktposition (44, 46, 47) unabhängig von einem Relativabstand der Kontaktfläche des Fahrzeugs unterhalb der Positioniereinheit (10) zu der Einfahrposition (42) der Positioniereinheit ausgebildet wird.

12. Verfahren nach Anspruch 10 oder 11,
**dadurch gekennzeichnet,**
**dass** in der Kontaktposition (44, 46, 47) während einer Änderung eines Relativabstandes der Kontaktfläche des Fahrzeugs unterhalb der Positioniereinheit (10) zu der Einfahrposition (42) der Positioniereinheit die Kontaktkraft konstant ausgebildet wird.

13. Verfahren nach einem der Ansprüche 10 bis 12,
**dadurch gekennzeichnet,**
**dass** zum Ausbilden der Kontaktkraft in der Kontaktposition (44, 46, 47) der Verstellantrieb (29) in eine Verstellposition mit einem maximalen Verstellweg (62) bewegt wird, wobei die Kontaktkraft von der Kontaktfeder (32) auf den Verstellantrieb übertragen wird.

## Claims

1. A positioning unit (10) for a charging station of an electrically driven vehicle, in particular an electric bus or similar, the positioning unit being able to be arranged above a vehicle, an electrical charging contact of the charging station being able to be moved relative to a contact surface of the vehicle and be contacted therewith by means of the positioning unit, the positioning unit having a hinged arm element (11) and a drive element (12) for driving the hinged arm element, the drive element having a displacement drive (29) for exerting a displacement force acting on the hinged arm element and a spring element (31) mechanically interacting with the displacement drive (29), the spring element comprising at least one contact spring (32), the displacement drive (29) and the contact spring (32) being coupled to each other in a mechanical series circuit (53) in such a manner that a contact force is exertable on the contact surface from the displacement drive (29) and the contact spring (32), the contact spring (32) being directly coupled with the displacement drive (29) via a floating bearing (56, 58), the contact spring (32) or the displacement drive being secured at a fixed bearing (59), the contact spring (32) or the displacement drive (29) being mechanically coupled with the hinged arm element (11) via a lever (48) of a control gear (49) of the spring element (31), the contact spring (32) being a tension spring (33), which is mechanically coupled with the displacement drive (29) via a clamping lever (51) of a clamping gear (52) of the spring element (31), the hinged arm element (11) being realized as a one-arm system (13) or as a scissor mechanism, preferably having a parallel guide, or as a pantograph, the spring element (31) comprising at least one lifting spring (34), which is a tension spring (35), for exerting a restoring force on the hinged arm element (11), the restoring force being greater than a weight of the hinged arm element acting inversely to the lifting spring (34), and the lifting spring (34) being mechanically coupled with the hinged arm element (11) via a lever (38) of a restoring gear (41) of the spring element (31), an effective length of the lever (38) being able to be changed depending on a position (42, 43, 44, 45, 46, 47) of the hinged arm.

2. The positioning unit according to any one of the preceding claims,
**characterized in that**
the displacement drive (29) comprises a back-up battery.

3. The positioning unit according to any one of the preceding claims,
**characterized in that**
the displacement drive (29) is a linear drive (30), preferably a spindle drive.

4. The positioning unit according to claim 3,
**characterized in that**
the linear drive (30) comprises a magnetic brake.

5. The positioning unit according to claim 3 or 4,
**characterized in that**
the linear drive (30) comprises a position sensor.

6. The positioning unit according to any one of the preceding claims,
**characterized in that**
the positioning unit (10) comprises a support frame (25) for fastening the positioning unit to a pole or an underpass.

7. The positioning unit according to any one of the preceding claims,
**characterized in that**
the positioning unit (10) has a pivoting element (63), by means of which the charging contact is pivoted from a vertical contact position (64) to a storage position (65) when the positioning unit is in a retracted position (42) for storing the charging contact.

8. A charging station, comprising an electrical charging contact and a positioning unit (10) according to any one of the preceding claims.

9. A method for establishing an electrically conductive connection between a vehicle, in particular an electric bus or similar, and a charging station, an electrical charging contact of the charging station being moved above a vehicle relative to a contact surface of the vehicle and contacted therewith by means of a positioning unit (10), a hinged arm element (11) of the positioning unit being driven by a drive element (12) of the positioning unit, a displacement drive (29) of the drive element causing a displacement force on the hinged arm element and a spring element (31) of the drive element mechanically interacting with the displacement drive, the displacement drive and a contact spring (32) of the spring element being coupled with each other in a mechanical series circuit (53), a contact force being exerted on the contact surface from the displacement drive and the contact spring, the contact spring (32) being directly coupled with the displacement drive (29) via a floating bearing (56, 58) and the contact spring (32) or the displacement drive being secured at a fixed bearing (59), the contact spring (32) or the displacement drive (29) being mechanically coupled with the hinged arm element (11) via a lever (48) of a control gear (49) of the spring element (31), the contact spring (32) being a tension spring (33), which is mechanically coupled with the displacement drive (29) via a clamping lever (51) of a clamping gear (52) of the spring element (31), the hinged arm element (11) being realized as a one-arm system (13) or as a scissor mechanism, preferably having a parallel guide, or as a pantograph, the spring element (31) comprising at least one lifting spring (34), which is a tension spring (35), for exerting a restoring force on the hinged arm element (11), said restoring force being greater than a weight of the hinged arm element acting inversely to the lifting spring (34), and the lifting spring (34) being mechanically coupled with the hinged arm element (11) via a lever (38) of a restoring gear (41) of the spring element (31), an effective length of the lever (38) being able to be changed depending on a position (42, 43, 44, 45, 46, 47) of the hinged arm.

10. The method according to claim 9,
**characterized in that**
by means of the hinged arm element (11) and the drive element (12), the charging contact is positioned between a contact position (44, 46, 47) for transmitting current, an extracted position (43, 45) for disrupting current and a retracted position (42) for storing the charging contact.

11. The method according to claim 10,
**characterized in that**
the contact position (44, 46, 47) is formed below the positioning unit (10) to the retracted position (42) of the positioning unit independently of a relative distance of the contact surface of the vehicle.

12. The method according to claim 10 or 11,
**characterized in that**
in the contact position (44, 46, 47), the contact force is exerted consistently while changing a relative distance of the contact surface of the vehicle below the positioning unit (10) to the retracted position (42) of the positioning unit.

13. The method according to any one of the claims 10 to 12,
**characterized in that**
for forming the contact force in the contact position (44, 46, 47), the displacement drive (29) is moved to a displacement position having a maximal displacement path (62), said contact force being transmitted from the contact spring (32) to the displacement drive.

## Revendications

1. Unité de positionnement (10) pour une station de charge d'un véhicule entraîné électriquement, notamment un bus électrique ou un véhicule semblable, l'unité de positionnement pouvant être disposée au-dessus d'un véhicule, un contact de charge électrique de la station de charge pouvant être bougé par rapport à une surface de contact du véhicule et pouvant être y contacté au moyen de l'unité de positionnement, l'unité de positionnement ayant un élément de bras articulé (11) et un élément d'entraînement (12) pour l'entraînement de l'élément de bras articulé, l'élément d'entraînement ayant un entraînement de déplacement (29) pour l'effort d'une force de déplacement agissant sur l'élément de bras articulé et un élément de ressort (31) interagissant mécaniquement avec l'entraînement de déplacement (29), l'élément de ressort comprenant au moins un ressort de contact (32), l'entraînement de déplacement (29) et le ressort de contact (32) étant couplés l'un à l'autre dans un couplage en série (53) mécanique dans telle manière qu'une force de contact est exercée sur la surface de contact à partir de l'entraînement de déplacement (29) et du ressort de contact (32), le ressort de contact (32) étant couplé directement à l'entraînement de déplacement (29) par un palier libre (56, 58), le ressort de contact (32) ou l'entraînement de déplacement étant sécurisés à un palier fixe (59), le ressort de contact (32) ou l'entraînement de déplacement (29) étant couplés mécaniquement à l'élément de bras articulé (11) par un levier (48) d'un équipement de commande (49) de l'élément de ressort (31), le ressort de contact (32) étant un ressort de traction (33), qui est couplé mécaniquement à l'entraînement de déplacement (29) par un levier de serrage (51) d'un équipement de serrage (52) de l'élément de ressort (31), l'élément de bras articulé (11) étant réalisé comme système (13) à un seul bras ou comme mécanisme à ciseaux, de préférence ayant un guide parallèle, ou comme pantographe, l'élément de ressort (31) comprenant au moins un ressort de levage (34), qui est un ressort de traction (35), pour l'effort d'une force de rétablissement sur l'élément de bras articulé (11), la force de rétablissement étant plus supérieure qu'un poids de l'élément de bras articulé agissant contrairement au ressort de levage (34), et le ressort de levage (34) étant couplé mécaniquement à l'élément de bras articulé (11) par un levier (38) d'un équipement de rétablissement (41) de l'élément de ressort (31), une longueur effective du levier (38) pouvant être changée en fonction d'une position (42, 43, 44, 45, 46, 47) du bras articulé.

2. Unité de positionnement selon l'une quelconque des revendications précédentes,
**caractérisée en ce que**
l'entraînement de déplacement (29) comprend une batterie tampon.

3. Unité de positionnement selon l'une quelconque des revendications précédentes,
**caractérisée en ce que**
l'entraînement de déplacement (29) est un entraînement linéaire (30), de préférence un entraînement d'arbre.

4. Unité de positionnement selon la revendication 3,
**caractérisée en ce que**
l'entraînement linéaire (30) comprend un frein magnétique.

5. Unité de positionnement selon la revendication 3 ou la revendication 4,
**caractérisée en ce que**
l'entraînement linéaire (30) comprend un capteur de distance.

6. Unité de positionnement selon l'une quelconque des revendications précédentes,
**caractérisée en ce que**
l'unité de positionnement (10) comprend un cadre de support (25) pour la fixation de l'unité de positionnement à un poteau ou un passage souterrain.

7. Unité de positionnement selon l'une quelconque des revendications précédentes,
**caractérisée en ce que**
l'unité de positionnement (10) a un élément de pivot (63), au moyen duquel le contact de charge est pivoté d'une position de contact (64) verticale à une position de stockage (65) quand l'unité de positionnement est dans une position retirée (42) pour le stockage du contact de charge.

8. Station de charge, comprenant un contact de charge électrique et une unité de positionnement (10) selon l'une quelconque des revendications précédentes.

9. Procédé pour l'établissement d'une connexion conductrice électriquement entre un véhicule, notamment un bus électrique ou un véhicule semblable, et une station de charge, un contact de charge électrique de la station de charge étant bougé au-dessus d'un véhicule par rapport à une surface de contact du véhicule et étant y contacté au moyen d'une unité de positionnement (10), un élément de bras articulé (11) de l'unité de positionnement étant entraîné par un élément d'entraînement (12) de l'unité de positionnement, un entraînement de déplacement (29) de l'élément d'entraînement effectuant une force de déplacement sur l'élément de bras articulé et un élément de ressort (31) de l'élément d'entraînement interagissant mécaniquement avec l'entraînement de déplacement, l'entraînement de déplacement et un ressort de contact (32) de l'élément de ressort étant couplés l'un à l'autre dans un couplage en série (53) mécanique, une force de contact étant exercée sur la surface de contact à partir de l'entraînement de déplacement et du ressort de contact, le ressort de contact (32) étant couplé directement à l'entraînement de déplacement (29) par un palier libre (56, 58), le ressort de contact (32) ou l'entraînement de déplacement étant sécurisés à un palier fixe (59), le ressort de contact (32) ou l'entraînement de déplacement (29) étant couplés mécaniquement à l'élément de bras articulé (11) par un levier (48) d'un équipement de commande (49) de l'élément de ressort (31), le ressort de contact (32) étant un ressort de traction (33), qui est couplé mécaniquement à l'entraînement de déplacement (29) par un levier de serrage (51) d'un équipement de serrage (52) de l'élément de ressort (31), l'élément de bras articulé (11) étant réalisé comme système (13) à un seul bras ou comme mécanisme à ciseaux, de préférence ayant un guide parallèle, ou comme pantographe, l'élément de ressort (31) comprenant au moins un ressort de levage (34), qui est un ressort de traction (35), pour l'effort d'une force de rétablissement sur l'élément de bras articulé (11), la force de rétablissement étant plus supérieure qu'un poids de l'élément de bras articulé agissant contrairement au ressort de levage (34), et le ressort de levage (34) étant couplé mécaniquement à l'élément de bras articulé (11) par un levier (38) d'un équipement de rétablissement (41) de l'élément de ressort (31), une longueur effective du levier (38) pouvant être changée en fonction d'une position (42, 43, 44, 45, 46, 47) du bras articulé.

10. Procédé selon la revendication 9,
**caractérisée en ce**
**qu'**au moyen de l'élément de bras articulé (11) et de l'élément d'entraînement (12), le contact de charge est positionné entre une position de contact (44, 46, 47) pour le transfert du courant, une position extraite (43, 45) pour la coupure du courant et une position retirée (42) pour le stockage du contact de charge.

11. Procédé selon la revendication 10,
**caractérisée en ce que**
la position de contact (44, 46, 47) est formée au-dessous de l'unité de positionnement (10) à la position retirée (42) de l'unité de positionnement indépendamment d'une distance relative de la surface de contact du véhicule.

12. Procédé selon la revendication 10 ou la revendication 11, **caractérisée en ce que**
dans la position de contact (44, 46, 47), la force de contact est exercée constamment pendant qu'une distance relative de la surface de contact du véhicule est changée au-dessous de l'unité de positionnement (10) à la position retirée (42) de l'unité de positionnement.

13. Procédé selon l'une quelconque des revendications 10 à 12, **caractérisée en ce que**
pour la formation de la force de contact dans la position de contact (44, 46, 47), l'entraînement de déplacement (29) est bougé à une position de déplacement ayant un trajet de déplacement (62) maximal, la force de contact étant transférée du ressort de contact (32) à l'entraînement de déplacement.
